# EUROPÄISCHE PATENTSCHRIFT

(11) **EP 3 384 354 B1**
(45) Veröffentlichungstag und Bekanntmachung des Hinweises auf die Patenterteilung: **08.09.2021**
(21) Anmeldenummer: 16816592.6
(22) Anmeldetag: 01.12.2016
(51) Int. Cl.: G05B 19/404, G05D 13/64, B65G 15/64

(54) **ELEKTRISCHES ANTRIEBSSYSTEM MIT SCHLUPFBEHAFTETER KOPPLUNGSEINHEIT**
ELECTRIC DRIVE SYSTEM COMPRISING A SLIPPING COUPLING UNIT
SYSTÈME D'ENTRAÎNEMENT ÉLECTRIQUE COMPRENANT UNE UNITÉ D'ACCOUPLEMENT SOUMISE À UN GLISSEMENT

(30) Priorität: 04.12.2015 DE 102015224337
(43) Veröffentlichungstag der Anmeldung: 10.10.2018
(73) Patentinhaber: Lenze Automation GmbH, 31855 Aerzen (DE)
(72) Erfinder: WEDEMEYER, Torsten, 32457 Porta Westfalica (DE); HARTMANN, Elmar, 31855 Aerzen (DE)
(74) Vertreter: Patentanwälte Ruff, Wilhelm, Beier, Dauster & Partner mbB
(86) Internationale Anmeldenummer: PCT/EP2016/079499
(87) Internationale Veröffentlichungsnummer: WO 2017/093436

(56) Entgegenhaltungen:
- EP-A1- 0 714 161
- DE-A1-102011 011 915
- DE-A1-102013 217 184
- JP-A- 2006 154 289
- JP-A- 2007 105 809

## Beschreibung

### Anwendungsgebiet und Stand der Technik

Die Erfindung betrifft ein elektrisches Antriebssystem mit einem Motor, einer Lasteinrichtung und einer Kopplungseinheit, wobei die Kopplungseinheit dazu ausgebildet ist, eine Drehbewegung einer Motorwelle des Motors in eine Bewegung der Lasteinrichtung entlang eines Pfads umzusetzen. Die Kopplungseinheit ist schlupfbehaftet.

Derartige elektrische Antriebssysteme werden beispielsweise bei Hochregallagern verwendet, wobei eine Lasteinrichtung in Form eines Läufers entlang eines zwischen Regalen gelegenen Pfads hindurchlaufen kann und Paletten oder andere zu verstauende Gegenstände in das Hochregallager einbringt oder aus diesen entnimmt. Dabei können Längen eines solchen Pfads von beispielsweise mehreren hundert Metern auftreten. Das erfindungsgemäße elektrische Antriebssystem ist jedoch nicht auf eine solche Anwendung oder auf bestimmte Größen eingeschränkt. Beispielsweise kann es auch in Verbindung mit einem Förderband verwendet werden, welches Gegenstände oder Schüttgut über eine bestimmte Strecke, insbesondere entlang des Pfads, transportiert.

Zur Auswertung von Geschwindigkeiten und/oder Positionen der Lasteinrichtung sind zur Risikominderung im Sinne der funktionalen Sicherheitstechnik häufig zwei unabhängige Geber beziehungsweise Encoder (Zwei-Geber-System) vorgeschrieben, wenn mit einem einzelnen Geber die geforderte Risikominderung für die Applikation nicht erreicht wird. Dies ist z.B. der Fall, wenn der Geber beziehungsweise Sensor, der eine tatsächliche Absolutposition der Lasteinrichtung beziehungsweise einer bewegten Achse wiederspiegelt, keine sicherheitstechnische Bewertung oder alleinige sicherheitstechnische Eignung aufweist.

Um ausreichend zuverlässige Werte für die jeweilige Position der Lasteinrichtung zu erhalten, ist es im Stand der Technik bekannt, eine Vielzahl von absoluten Positionsmarken innerhalb eines Bewegungsbereichs der Lasteinrichtung vorzusehen, wobei an den jeweiligen Positionsmarken die Absolutpositionen von Geberkanälen beziehungsweise Sensorkanälen zwecks Kompensation des applikationsbedingten Schlupfes abgeglichen werden können. Ein Abgleich erfolgt dabei unabhängig von der Anzahl der Positionsmarken ausschließlich an den definierten Positionsmarken.

Die Anzahl der Positionsmarken ist typischerweise abhängig vom zu erwartenden Schlupf zwischen den Positionsmarken, von der applikationsbedingt zulässigen Ungenauigkeit bezüglich des aus beiden Sensorsignalen gebildeten Absolutwerts, und von der geometrischen Ausdehnung des Pfads beziehungsweise Bewegungsbereichs.

Bei den eingangs erwähnten Läufern beziehungsweise Regalbediengeräten von Hochregallagern, die Gassenlängen von bis zu 200 m und mehr abdecken können, führt dies bei Ausführungen gemäß dem Stand der Technik zu einer sehr hohen Anzahl von Positionsmarken entlang des Pfads. Diese werden typischerweise in Abhängigkeit der zulässigen Toleranzen positionsgenau montiert.

Für die Auswertung der Positionsmarken durch sicherheitstechnische Auswerteeinheiten, beispielsweise eine antriebsintegrierte Sicherheitstechnik oder Sicherheitssteuerung, werden die Positionsmarken typischerweise vor der Inbetriebnahme durch den Anwender parametriert, damit diese in der sicherheitsgerichteten Applikation eindeutig identifiziert werden können. Die korrekte Position und Parametrierung der Positionsmarken wird dabei im Rahmen der Inbetriebnahme validiert.

Es hat sich gezeigt, dass die Anwendung von Positionsmarken insgesamt zu einem sehr hohen Aufwand führt.

Die DE 10 2013 217 184 A1 zeigt eine Betätigungseinrichtung mit einer Schlupfbetrag-Berechnungseinrichtung, um einen Schlupfbetrag eines ersten Elements in Bezug auf ein zweites, elastisches Element zu berechnen, wobei die Schlupfbetrag-Berechnungseinrichtung den Schlupfbetrag auf Basis einer Änderung in einer Verlagerungsrate von dem ersten Element, einer Differenz zwischen jeweiligen Verlagerungen des ersten Elements und des zweiten Elements und einem Ausgabemoment eines Drehantriebs berechnet.

Die JP 2006-154289 A und die JP 2007 105809 A zeigen jeweils Diagnosemarken auf Förderbändern, die zur Positionserkennung des Förderbands dienen.

### Aufgabe und Lösung

Es ist deshalb eine Aufgabe der Erfindung, ein elektrisches Antriebssystem bereitzustellen, welches ohne Verlust an Sicherheit mit weniger Aufwand zu realisieren ist.

Dies wird erfindungsgemäß durch ein elektrisches Antriebssystem nach Anspruch 1 erreicht. Vorteilhafte Ausgestaltungen können beispielsweise den Unteransprüchen entnommen werden.

Der Inhalt der Ansprüche wird durch ausdrückliche Inbezugnahme zum Inhalt der Beschreibung gemacht.

Die Erfindung betrifft ein elektrisches Antriebssystem.

Das elektrische Antriebssystem weist einen Motor mit einer Motorwelle (Abtriebswelle) auf. Der Motor ist beispielsweise als Elektromotor ausgebildet und dient zum Antrieb.

Das elektrische Antriebssystem weist eine Lasteinrichtung auf, die entlang eines Pfads bewegbar ist. Bei dieser Lasteinrichtung handelt es sich typischerweise um dasjenige Element, welches eine Nutzlast oder einen anderen Gegenstand bewegt. Beispielsweise kann es sich bei der Lasteinrichtung um einen Läufer eines Hochregallagers handeln. Es kann sich jedoch beispielsweise auch um ein Förderband oder um eine andere Einheit handeln.

Das elektrische Antriebssystem weist eine Kopplungseinheit auf, die dazu ausgebildet ist, eine Drehbewegung der Motorwelle in eine Bewegung der Lasteinrichtung entlang des Pfads umzusetzen, wobei die Kopplungseinheit schlupfbehaftet ist. Bei einer solchen Kopplungseinheit kann es sich beispielsweise um ein Reibrad oder um einen Riemen handeln. Unter dem Begriff eines Schlupfes sei insbesondere eine Abweichung zwischen einer Drehung der Motorwelle um einen bestimmten Winkel und einer dazu rein rechnerisch korrespondierenden Bewegung der Lasteinrichtung verstanden. Ein solcher Schlupf kann insbesondere auftreten, wenn Komponenten wie beispielsweise ein nicht gezahnter Riemen oder ein Reibrad vorhanden sind, welche zur Kraftübertragung auf Reibung angewiesen sind und insbesondere keinen Formschluss mit einem antreibenden und/oder abtreibenden Element haben. Im Übrigen sei hinsichtlich des Begriffs Schlupfs auch auf die einschlägige Fachliteratur verwiesen.

Das elektrische Antriebssystem weist einen Motorgeber zum Ermitteln einer Drehwinkelstellung der Motorwelle auf. Dieser gibt die jeweilige Drehwinkelstellung des Motors bzw. der Motorwelle typischerweise in elektrisch bzw. elektronisch verarbeitbarer Form aus. Bei dem Motorgeber kann es sich beispielsweise um einen Resolver usw. handeln.

Das elektrische Antriebssystem weist weiter einen Lastgeber zum Ermitteln einer lastgeberbasierten Position der Lasteinrichtung auf. Dieser gibt typischerweise die Position der Lasteinrichtung in elektrisch bzw. elektronisch verarbeitbarer Form aus.

Das elektrische Antriebssystem weist weiter eine elektronische Steuerungsvorrichtung auf. Die elektronische Steuerungsvorrichtung ist mit dem Motorgeber und dem Lastgeber verbunden, d.h. in Signalverbindung stehend.

Die elektronische Steuerungsvorrichtung ist dazu konfiguriert, eine motorgeberbasierte Position der Lasteinrichtung basierend auf einer vom Motorgeber ermittelten Änderung der Drehwinkelstellung der Motorwelle zu berechnen. Des Weiteren ist die elektronische Steuerungsvorrichtung dazu konfiguriert, nach jeder Änderung der Drehwinkelstellung der Motorwelle um einen vorgebbaren Referenzwert bzw. nach Änderungen der über den Motorgeber erfassten Position um einen vorgebbaren Referenzwert eine Differenzberechnung (Schlupfberechnung) zwischen der motorgeberbasierten Position und der lastgeberbasierten Position durchzuführen, d.h. einen Schlupf basierend auf einer Differenz zwischen der motorgeberbasierten Position und der lastgeberbasierten Position zu berechnen, und die motorgeberbasierte Position auf die lastgeberbasierte Position zu setzen, wenn der Schlupf kleiner als ein erster vorgebbarer Schlupfschwellenwert ist, und einen Fehlerzustand einzunehmen, wenn der Schlupf größer als ein zweiter vorgebbarer Schlupfschwellenwert ist. Der erste Schlupfschwellenwert und der zweite Schlupfschwellenwert können identisch sein oder sich zum Bilden einer Hysterese unterscheiden. Der (erste, zweite) Schlupfschwellenwert kann beispielsweise 10 %, 5 %, 2,5 %, 2 % oder 1% betragen (beispielsweise berechnet als ein Betrag einer Differenz zwischen der motorgeberbasierten Position und der lastgeberbasierten Position bezogen auf die motorgeberbasierte Position).

Die motorgeberbasierte Position basiert dabei insbesondere auf der geänderten Drehwinkelstellung der Motorwelle. Die lastgeberbasierte Position basiert typischerweise auf Ausgangsdaten des Lastgebers. Insbesondere können jeweilige Differenzen zu vorherigen Werten, beispielsweise zu jeweiligen Abtastzeitpunkten, betrachtet werden. Bei der Einnahme eines Fehlerzustands kann das System insbesondere angehalten werden, um eine Beschädigung oder Fehlfunktion zu vermeiden.

Mittels des erfindungsgemäßen elektrischen Antriebssystems kann die Position der Lasteinrichtung entlang des Pfads nicht nur basierend auf dem möglicherweise fehlerbehafteten und nicht sicherheitsklassifizierten Lastgeber, sondern auch basierend auf dem zuverlässigeren Motorgeber berechnet werden. Dies ermöglicht die Verwendung des zuverlässigen Motorgebers zur redundanten Berechnung der Position der Lasteinrichtung. Das redundante Bestimmen der Position der Lasteinrichtung mittels des Motorgebers erfolgt nur, solange der Schlupf unterhalb des Schlupfschwellenwerts bleibt. Somit kann sichergestellt werden, dass beide Geber miteinander vergleichbar bleiben, wodurch die Verfügbarkeit und die Genauigkeit der zweikanaligen Geberauswertung sichergestellt werden kann. Es versteht sich, dass auch der Motorgeber nicht sicher ausgeführt sein kann. Im Zusammenspiel von zwei nicht sicheren Komponenten kann für diesen Fall wieder eine sichere Funktion entstehen.

Gemäß einer Ausführungsform entspricht der Referenzwert einer vollständigen Umdrehung des Motors bzw. der Motorwelle. Dies entspricht einer einfachen und praktikablen Ausführung. Eine vollständige Umdrehung kann insbesondere einen Winkel von 360° bedeuten. Es kann jedoch auch ein Referenzwert von mehreren vollständigen Umdrehungen, beispielsweise zwei, drei oder vier oder noch mehr vollständigen Umdrehungen, verwendet werden. Auch ein Bruchteil einer vollständigen Umdrehung, beispielsweise 180° oder 90°, kann verwendet werden.

Die motorgeberbasierte Position kann insbesondere mittels eines Modells der Kopplungseinheit berechnet werden. Ein solches Modell kann beispielsweise Übersetzungsverhältnisse und andere mechanische Charakteristika der Kopplungseinheit berücksichtigen. Es kann beispielsweise einer vollständigen Umdrehung des Motors bzw. der Motorwelle eine bestimmte Strecke entlang des Pfads zuordnen.

Das hinter dem erfindungsgemäßen elektrischen Antriebssystem stehende Konzept basiert grundsätzlich auf einer kontinuierlichen, zyklischen Kompensation, die aus einer festen, definierten Relativbewegung, beispielsweise 360° Motorbewegung, des Motorgebers abgeleitet wird. Dabei wird der für diese Relativbewegung parametrierte zulässige Schlupf durch die elektronische Steuerungsvorrichtung, welche beispielsweise auch als Sicherheitssystem bezeichnet werden kann, überwacht. Liegt der erfasste Schlupf bezogen auf die Relativbewegung innerhalb der erwarteten parametrierten Grenzen, insbesondere unterhalb des Schlupfschwellenwerts, so wird der Schlupf nach Erreichen der Relativbewegung kompensiert, indem der Absolutwert des Lastgebers auf den Absolutwertkanal des Motorgebers übertragen wird. Die zyklische Schlupfkompensation erfordert also keine physikalischen Positionsmarken.

Mittels dieser Vorgehensweise werden insbesondere trotz der Schlupfkompensation die folgenden sicherheitstechnisch zu betrachtenden Fehler beherrscht bzw. erkannt:
- Schlupf des Motorgebers,
- Positionssprünge des Lastgebers,
- Bitfehler des Lastgebers,
- Messfehler des Lastgebers, einschließlich etwaiger Störung durch Hindernisse.

Damit können die häufigsten und wichtigsten auftretenden Fehler mittels des erfindungsgemäßen elektrischen Antriebssystems zuverlässig erkannt werden. Lediglich Langzeitdriftfehler des Lastgebers werden unter Anwendung der hier beschriebenen Schlupfkompensation nicht erkannt.

Gemäß einer Weiterbildung ist entlang des Pfads eine maximale Anzahl (beispielsweise maximal zwei) von Diagnosemarken an definierten, insbesondere ortsfesten, Diagnosemarkenpositionen angeordnet. Die Diagnosemarkenposition ist dabei typischerweise definiert und bekannt. Eine Diagnosemarke kann auch als Positionsmarke bezeichnet werden. Die elektronische Steuerungsvorrichtung ist dabei dazu konfiguriert, ein Überfahren der Diagnosemarke durch die Lasteinrichtung zu erkennen, beispielsweise mittels eines Tasters oder Sensors, und beim Überfahren der Diagnosemarke die Diagnosemarkenposition mit der lastgeberbasierten Position zu vergleichen, um mögliche Driftfehler des Lastgebers und/oder Fehler im Zusammenhang mit der Diagnosemarke (beispielsweise eine Verschmutzung der Diagnosemarke) zu erfassen.

Die Steuerungsvorrichtung kann weiter dazu konfiguriert sein zu überwachen, ob die Diagnosemarke an der Diagnosemarkenposition detektierbar bzw. erkennbar ist, und den Fehlerzustand einzunehmen, wenn die Diagnosemarke nicht an der Diagnosemarkenposition detektierbar ist, beispielsweise weil die Diagnosemarke verschmutzt oder defekt ist.

Durch das Verwenden einer zusätzlichen Diagnosemarke können auch Driftfehler, insbesondere Langzeitdriftfehler, des Lastgebers erfasst und entsprechend kompensiert beziehungsweise das System angehalten werden. Insbesondere kann der Fehlerzustand bei einer Abweichung der Diagnosemarkenposition und der lastgeberbasierten Position, welche größer als ein vorgegebener Schwellenwert ist, eingenommen werden. Damit können Fehler oder Beschädigungen aufgrund eines Driftfehlers des Lastgebers zuverlässig vermieden werden. Es sei darauf hingewiesen, dass im Gegensatz zur Ausführung gemäß dem Stand der Technik lediglich eine einzelne Diagnosemarke erforderlich ist, um derartige Driftfehler des Lastgebers zu erkennen. Auf die Verwendung einer gemäß dem Stand der Technik üblichen Vielzahl von Diagnosemarken kann verzichtet werden, was erheblich zur Verringerung von Aufwand beiträgt.

Die elektronische Steuerungsvorrichtung ist bevorzugt dazu konfiguriert, den Motor derart anzusteuern, dass die Lasteinrichtung die Diagnosemarke zyklisch überfährt. Dies gewährleistet eine regelmäßige Kontrolle auf Driftfehler. Beispielsweise kann die elektronische Steuerungsvorrichtung dazu konfiguriert sein, den Motor derart anzusteuern, dass die Lasteinrichtung die Diagnosemarke nach einer vorbestimmten Zeit oder nach einer vorbestimmten Wegstrecke überfährt.

Die Diagnosemarke kann insbesondere an einer Stelle entlang des Pfads angeordnet sein, in welcher eine maximale Bewegungsgeschwindigkeit der Lasteinrichtung zulässig ist. Dies hat sich als vorteilhaft herausgestellt.

Die elektronische Steuerungsvorrichtung ist ferner dazu konfiguriert, basierend auf dem Schlupf ein der Kopplungseinheit zugeordnetes Abnutzungsmaß zu berechnen. Beispielsweise kann das Abnutzungsmaß umso höher ermittelt werden, je höher der Schlupf ist. Damit kann beispielsweise der Hinweis für einen Benutzer gegeben werden, wann Komponenten, insbesondere der Kopplungseinheit, auszutauschen sind oder ein sicherer Betrieb nicht mehr gewährleistet ist.

Der Motor kann insbesondere ein Elektromotor sein. Es kann jedoch beispielsweise auch ein Verbrennungsmotor, ein Hydraulikmotor, ein thermodynamischer Motor oder eine andere Art von Motor verwendet werden.

Die Lasteinheit kann insbesondere ein Läufer einer Hochregalanordnung, ein Drehtisch oder ein Förderband sein. Für derartige Anwendungen hat sich das elektrische Antriebssystem als besonders vorteilhaft herausgestellt.

Die elektronische Steuerungsvorrichtung kann vorteilhaft dazu ausgebildet sein, in Systemen der funktionalen Sicherheit betrieben zu werden. Insbesondere kann damit die Sicherheit, welche bei Ausführungen gemäß dem Stand der Technik durch eine Vielzahl von Diagnosemarken erreicht wird, durch verhältnismäßig einfache Berechnungen erreicht werden.

Bei Anwendungen des elektrischen Antriebssystems in Applikationen mit Sicherheitsfunktionen, die eine sicherheitstechnische Überwachung der Absolutposition erfordern, ist generell die initiale Durchführung einer Referenzfahrt sinnvoll, für welche ein Positionsschalter und mindestens eine Positionsmarke beziehungsweise Diagnosemarke verwendet werden. Diese Anforderung liegt darin begründet, dass mittels der Referenzfahrt zunächst ein Bezug zwischen der Absolutposition bzw. einem Absolutpositionswert und einem internen Maßsystem hergestellt wird. Mit einem Referenzevent kann dann erkannt werden, ob die Diagnosemarke an derjenigen Position sitzt, an der sie erwartet wird, und ob dieser Absolutpositionswert auch mit der Absolutwertgeberposition übereinstimmt.

Bei dem Lastgeber handelt es sich insbesondere um einen Geber, welcher eine beliebige nicht sicherheitsbewertete Schnittstelle eines Maschinenteils aufweist, und welcher durch mechanische Eigenschaften eine betriebsbedingt abweichende Position zum ersten schlupfbehafteten Geber, insbesondere dem Motorgeber, aufweisen kann.

Dieser Effekt ist beispielsweise bei Fahrantrieben, die mit einem Reibrad ausgestattet sind, von Bedeutung. Durch wechselnde Brems- und Beschleunigungsvorgänge kann sich in Abhängigkeit von auftretendem Schlupf zwischen Motor- und Lastgeber ein tendenziell zunehmender Schlupf kumulieren. Da die sicherheitstechnische Diagnose auf die Vergleichbarkeit beider Geberkanäle angewiesen ist, würde der beschriebene Effekt gegebenenfalls kurzfristig zu einem Verfügbarkeitsproblem führen.

Bei der hierin beschriebenen Ausführung wird der Schlupf unter Berücksichtigung aller relevanten sicherheitstechnischen Aspekte kompensiert. Voraussetzung ist typischerweise, dass der maximal zu kompensierende bzw. erlaubte Schlupf, der auf einem definierten, parametrierbaren Weg auftreten kann, bekannt ist. Die Schlupfkompensation bewirkt typischerweise unter Berücksichtigung sicherheitstechnischer Aspekte einen Abgleich der Positionen beider Geberkanäle in einem zweikanaligen System einer sicherheitskritischen Applikation, wobei ein Abgleich wiederholt stattfinden kann, sobald jeweils ein vorgegebener Weg zurückgelegt worden ist.

Im Vergleich zu Ausführungen gemäß dem Stand der Technik können wie erwähnt insbesondere erheblich weniger Diagnosemarken beziehungsweise Positionsmarken verwendet werden. Im Vergleich zu anderen Ausführungen, welche auf einer Vermeidung des Schlupfes basieren, beispielsweise durch die Verwendung von Zahnriemenantrieben oder Zahnrädern, ist eine deutlich günstigere Ausführung möglich. Des Weiteren wird die Parametrierung des Systems stark vereinfacht, die Montage- und Inbetriebnahmezeiten werden signifikant verkürzt, der Wartungsaufwand wird verringert und die Verfügbarkeit des Systems wird erhöht, da ansonsten verwendete Positionsmarken zum Ausfall des Systems führen können, beispielsweise wenn diese verschmutzt oder beschädigt sind.

### Kurze Beschreibung der Zeichnung

Die Erfindung wird nachfolgend unter Bezugnahme auf die Zeichnungen detailliert beschrieben. Hierbei zeigen:
- Fig. 1:: ein elektrisches Antriebssystem, und
- Fig. 2:: eine schematische Darstellung der Berechnung einer motorgeberbasierten Position.

### Detaillierte Beschreibung der Ausführungsbeispiele

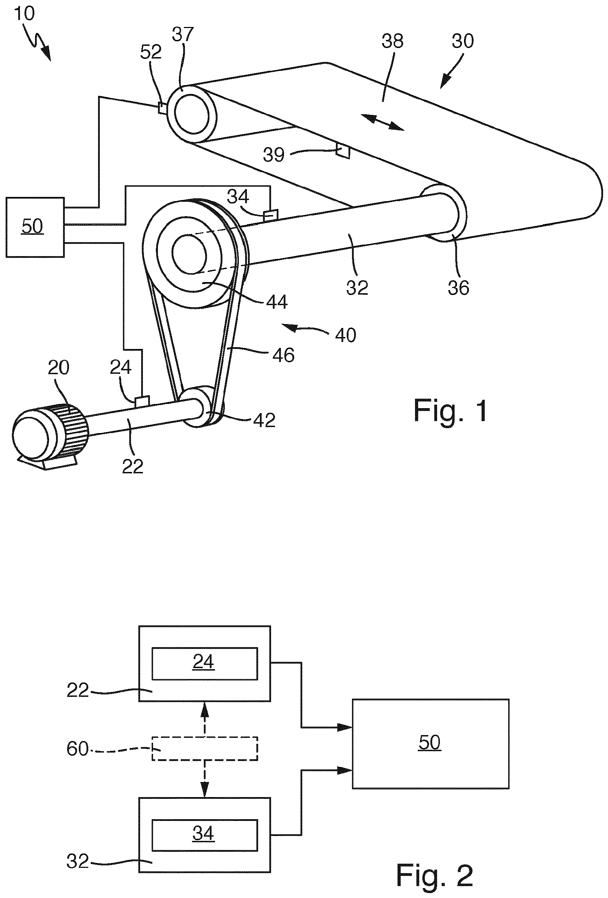

Fig. 1 zeigt schematisch ein elektrisches Antriebssystem 10 gemäß einem Ausführungsbeispiel der Erfindung. Das elektrische Antriebssystem 10 weist einen Motor 20 in Form eines Elektromotors auf. Der Motor 20 weist eine erste (Motor-) Welle 22 auf oder ist mit der Welle 22 drehfest verbunden. Auf der ersten Welle 22 ist ein Motorgeber 24 angeordnet.

Das elektrische Antriebssystem weist eine Lasteinrichtung 30 in Form einer Förderbandanordnung auf. Die Lasteinrichtung 30 weist eine zweite Welle 32 auf, auf welcher ein Lastgeber 34 angeordnet ist. Auf der zweiten Welle 32 ist eine erste Antriebsrolle 36 angeordnet, welche von der zweiten Welle 32 angetrieben wird. Parallel hierzu ist eine zweite Antriebsrolle 37 angeordnet. Zwischen den beiden Antriebsrollen 36, 37 ist ein Förderband 38 gespannt, welches bei Drehung der zweiten Welle 32 bewegt wird.

An dem Förderband 38 ist ein Referenzelement 39 angeordnet, welches an einer bestimmten Stelle des Förderbands 38 fixiert ist. Auf dessen Bedeutung wird weiter unten näher eingegangen werden.

Zwischen dem Motor 20 und der Lasteinrichtung 30 ist eine Kopplungseinheit 40 angeordnet. Die Kopplungseinheit 40 weist ein erstes Rad 42, ein zweites Rad 44 und ein dazwischen gespanntes Band 46 auf. Das erste Rad 42 ist auf der ersten Welle 22 angebracht. Das zweite Rad 44 ist auf der zweiten Welle 32 angebracht. Das Band 46 ist zwischen den beiden Rädern 42, 44 derart gespannt, dass eine Drehbewegung des ersten Rads 42 auf das zweite Rad 44 übertragen wird.

Da es sich bei dem Band 46 um ein flaches Band handelt, welches insbesondere keine Zähne oder sonstige Strukturierung aufweist, und auch die beiden Räder 42, 44 eine jeweilige flache Oberfläche aufweisen, erfolgt die Übertragung der Drehbewegung des Motors 20 auf die Lasteinrichtung 30 schlupfbehaftet. Dies bedeutet, dass zwar grundsätzlich durch das Verhältnis der Durchmesser der beiden Räder 42, 44 eine bestimmte Übersetzung vorgegeben wird, welche die Drehgeschwindigkeit der zweiten Welle 32 relativ zur ersten Welle 22 angibt, dass diese Beziehung jedoch mit einer Unsicherheit behaftet ist, da die Übertragung der Drehbewegung letztlich von der Reibung zwischen den beiden Rädern 42, 44 und dem Band 46 abhängt.

Der Motorgeber 24 ist dazu ausgebildet, eine Drehwinkelstellung der ersten Welle 22 zu messen. Der Lastgeber 34 ist dazu ausgebildet, eine Drehwinkelstellung der zweiten Welle 32 zu messen. Der Motorgeber 24 ist dabei sicherheitsbewertet, d.h. er hat eine besonders hohe Vertrauenswürdigkeit. Der Lastgeber 34 ist demgegenüber nicht sicherheitsbewertet und dementsprechend nur eingeschränkt vertrauenswürdig. Eine Steuerung der Position des Förderbands 38 ist somit allein basierend auf dem Lastgeber 34 nicht zulässig.

Das elektrische Antriebssystem 10 weist ferner eine elektronische Steuerungsvorrichtung 50 auf. Wie gezeigt ist die elektronische Steuerungsvorrichtung 50 mit dem Motorgeber 24 und dem Lastgeber 34 signaltechnisch verbunden (die signaltechnische Verbindung kann drahtgebunden oder drahtlos ausgeführt sein), so dass die elektronische Steuerungsvorrichtung 50 die jeweiligen Drehwinkelstellungen erhält.

Des Weiteren weist das elektrische Antriebssystem 10 einen Schalter 52 als Diagnosemarke auf, welcher ebenfalls mit der elektronischen Steuerungsvorrichtung 50 verbunden ist. Der Schalter 52 ist unmittelbar benachbart zum Förderband 38 angeordnet und ist dazu ausgebildet zu detektieren, wenn das Referenzelement 39 an der entsprechenden Stelle des Schalters 52 vorbeikommt.

Um eine genaue, d.h. motorgeberbasierte Position der Lasteinrichtung 30 zu berechnen, wertet die elektronische Steuerungsvorrichtung 50 laufend die Signale des Motorgebers 24 und des Lastgebers 34 aus. Die motorgeberbasiere Position der Lasteinrichtung wird dabei basierend auf einer vom Motorgeber 24 ermittelten Änderung der Drehwinkelstellung der ersten Welle 22 berechnet. Dazu kann grundsätzlich die bereits weiter oben erwähnte Charakteristik der Kopplungseinheit 40 verwendet werden. Nach jeder Änderung der Drehwinkelstellung der ersten Welle 22 um 360° berechnet die elektronische Steuerungsvorrichtung 50 basierend auf einer Differenz zwischen der Drehwinkelstellung der zweiten Welle 32 und der ersten Welle 22 einen Schlupf. Dieser kann sich insbesondere in einer Abweichung zwischen der erwarteten Drehwinkelstellung oder Änderung der Drehwinkelstellung der zweiten Welle 32 zur tatsächlich gemessenen Drehwinkelstellung oder Änderung der Drehwinkelstellung der zweiten Welle 32 bemessen.

Wenn der berechnete Schlupf unter einem Schlupfschwellenwert liegt, wird die motorgeberbasierte Position auf die lastgeberbasierte Position gesetzt, d.h. auf die Position, welche anhand des Lastgebers 34 unmittelbar gemessen wurde. Dies basiert auf der Überlegung, dass bei einem sehr kleinen Schlupf der Lastgeber 34 vertrauenswürdig erscheint. Sollte der Schlupf dagegen über dem Schlupfschwellenwert sein, wird ein Fehlerzustand eingenommen, was insbesondere bedeutet, dass der Motor 20 gestoppt und das System somit zum Stillstand gebracht wird.

Es sei in diesem Zusammenhang darauf hingewiesen, dass auf eine Position des Förderbands 38, welche sich beispielsweise in einer Position des Referenzelements 39 ausdrücken kann, insbesondere mittels des bekannten Durchmessers der ersten Antriebsrolle 36 unter Berücksichtigung der Drehwinkelstellung der zweiten Welle 32 geschlossen werden kann.

Jedes Mal, wenn das Referenzelement 39 an dem Schalter 52 vorbeikommt, überprüft die elektronische Steuerungsvorrichtung 50, ob die durch den Lastgeber 34 angezeigte Drehwinkelstellung der zweiten Welle 32 dieser Position des Förderbands 38 entspricht. Damit können Driftfehler des Lastgebers 34 erkannt werden, insbesondere solche, die über einen längeren Zeitraum auftreten. Sollte eine dabei ermittelte Abweichung zu groß sein, wird das System ebenfalls gestoppt und eine Anweisung zum Überprüfen des Lastgebers 34 ausgegeben.

Fig. 2 zeigt schematisch, wie die elektronische Steuerungsvorrichtung 50 zu einer sicheren Absolutposition in Form einer motorgeberbasierten Position kommt. Dabei sind die beiden Wellen 22, 32 mit dem Motorgeber 24 bzw. mit dem Lastgeber 34 gezeigt. Zwischen den beiden Wellen 22, 32 herrscht, wie bereits erwähnt, ein schematisch mit Bezugszeichen 60 dargestellter Schlupf. Aufgrund dieses Schlupfes kann eine Abweichung zwischen den erwarteten Änderungen der Drehwinkelstellungen auftreten. Wenn diese Abweichung klein genug ist, kann eine laufende zyklische Berechnung einer sicheren Absolutposition erfolgen. Wenn der Schlupf zu groß ist, wird ein Fehlerzustand eingenommen und damit eine möglicherweise schädliche Fehlfunktion des Systems verhindert.

Erfindungsgemäß kann dem nicht sicherheitsbewerteten Geber vertraut werden. Eine zweikanalige Geberauswertung ist dauerhaft möglich, da in definierten Schritten eine Validierung der Vertrauenswürdigkeit stattfindet. Die gemessene Abweichung darf nicht oberhalb des erwarteten Schlupfes liegen.

## Patentansprüche

1. Elektrisches Antriebssystem (10), aufweisend:
- einen Motor (20) mit einer Motorwelle (22),
- eine Lasteinrichtung (30), die entlang eines Pfads bewegbar ist,
- eine Kopplungseinheit (40), die dazu ausgebildet ist, eine Drehbewegung der Motorwelle (22) in eine Bewegung der Lasteinrichtung (30) entlang des Pfads umzusetzen, wobei die Kopplungseinheit (40) schlupfbehaftet ist,
- einen Motorgeber (24) zum Ermitteln einer Drehwinkelstellung der Motorwelle (22),
- einen Lastgeber (34) zum Ermitteln einer lastgeberbasierten Position der Lasteinrichtung (30), und
- eine elektronische Steuerungsvorrichtung (50),
- die mit dem Motorgeber (24) und dem Lastgeber (34) verbunden ist,
- die dazu konfiguriert ist, eine motorgeberbasierte Position der Lasteinrichtung (30) basierend auf einer vom Motorgeber (24) ermittelten Änderung der Drehwinkelstellung der Motorwelle (22) zu berechnen,
- und die dazu konfiguriert ist, nach jeder Änderung der Drehwinkelstellung der Motorwelle (22) um einen Referenzwert einen Schlupf (60) basierend auf einer Differenz zwischen der motorgeberbasierten Position und der lastgeberbasierten Position zu berechnen
**dadurch gekennzeichnet, dass**
die elektronische Steuerungsvorrichtung (50) ferner dazu konfiguriert ist,
die motorgeberbasierte Position auf die lastgeberbasierte Position zu setzen, wenn der Schlupf (60) kleiner als ein Schlupfschwellenwert ist;
einen Fehlerzustand einzunehmen, wenn der Schlupf (60) größer als der Schlupfschwellenwert ist;
und basierend auf dem Schlupf (60) ein der Kopplungseinheit (40) zugeordnetes Abnutzungsmaß zu berechnen.

2. Elektrisches Antriebssystem (10) nach Anspruch 1, **dadurch gekennzeichnet, dass**
- der Referenzwert einer vollständigen Umdrehung der Motorwelle (22) entspricht.

3. Elektrisches Antriebssystem (10) nach einem der vorhergehenden Ansprüche, **dadurch gekennzeichnet, dass**
- die motorgeberbasierte Position mittels eines Modells der Kopplungseinheit (40) berechnet wird.

4. Elektrisches Antriebssystem (10) nach einem der vorhergehenden Ansprüche, **dadurch gekennzeichnet, dass**
- entlang des Pfads zumindest eine Diagnosemarke (52) an einer Diagnosemarkenposition angeordnet ist, wobei die elektronische Steuerungsvorrichtung (50) dazu konfiguriert ist,
- ein Überfahren der Diagnosemarke (52) durch die Lasteinrichtung (30) zu erkennen und beim Überfahren der Diagnosemarke (52) die Diagnosemarkenposition mit der lastgeberbasierten Position zu vergleichen, um mögliche Driftfehler des Lastgebers (34) zu erfassen, und/oder
- zu überwachen, ob die Diagnosemarke (52) an der Diagnosemarkenposition detektierbar ist und den Fehlerzustand einzunehmen, wenn die Diagnosemarke (52) nicht an der Diagnosemarkenposition detektierbar ist.

5. Elektrisches Antriebssystem (10) nach Anspruch 4, **dadurch gekennzeichnet, dass**
- die elektronische Steuerungsvorrichtung (50) dazu konfiguriert ist, den Motor (20) derart anzusteuern, dass die Lasteinrichtung (30) die Diagnosemarke (52) zyklisch überfährt.

6. Elektrisches Antriebssystem (10) nach Anspruch 4 oder 5, **dadurch gekennzeichnet, dass**
- die Diagnosemarke (52) an einer Stelle entlang des Pfads angeordnet ist, in welcher eine maximale Bewegungsgeschwindigkeit der Lasteinrichtung (30) zulässig ist.

7. Elektrisches Antriebssystem (10) nach einem der vorhergehenden Ansprüche, **dadurch gekennzeichnet, dass**
- der Motor (20) ein Elektromotor ist.

8. Elektrisches Antriebssystem (10) nach einem der vorhergehenden Ansprüche, **dadurch gekennzeichnet, dass**
- die Lasteinrichtung (30) ein Läufer einer Hochregalanordnung, ein Drehtisch und/oder ein Förderband (38) ist.

9. Elektrisches Antriebssystem (10) nach einem der vorhergehenden Ansprüche, **dadurch gekennzeichnet, dass**
- die elektronische Steuerungsvorrichtung (50) dazu ausgebildet ist, in Systemen der funktionalen Sicherheit betrieben zu werden.

## Claims

1. Electrical drive system (10), comprising:
- a motor (20) comprising a motor shaft (22),
- a load device (30) which can be moved along a path,
- a coupling unit (40) which is designed to convert a rotational movement of the motor shaft (22) into a movement of the load device (30) along the path, wherein the coupling unit (40) is subject to slip,
- a motor sensor (24) for ascertaining a rotation angle position of the motor shaft (22),
- a load sensor (34) for ascertaining a load sensor-based position of the load device (30), and
- an electronic control apparatus (50)
- being connected to the motor sensor (24) and the load sensor (34),
- being configured to calculate a motor sensor-based position of the load device (30) based on a change in the rotation angle position of the motor shaft (22), which change is ascertained by the motor sensor (24),
- and being configured, after each change in the rotation angle position of the motor shaft (22) by a reference value, to calculate a slip (60) based on a difference between the motor sensor-based position and the load sensor-based position,
**characterized in that**
- the electronic control apparatus (50) is further configured
- to set the motor sensor-based position to the load sensor-based position when the slip (60) is smaller than a slip threshold value;
- to assume a fault state when the slip (60) is greater than the slip threshold value;
- and to calculate an amount of wear, which is associated with the coupling unit (40), based on the slip (60).

2. Electrical drive system (10) according to claim 1, **characterized in that**
- the reference value corresponds to a complete revolution of the motor shaft (22).

3. Electrical drive system (10) according to any of the preceding claims, **characterized in that**
- the motor sensor-based position is calculated by means of a model of the coupling unit (40).

4. Electrical drive system (10) according to any of the preceding claims, **characterized in that**
- at least one diagnosis marker (52) is arranged at a diagnosis marker position along the path, wherein the electronic control apparatus (50) is configured
- to identify crossing of the diagnosis marker (52) by the load device (30) and, when the diagnosis marker (52) is crossed, to compare the diagnosis marker position with the load sensor-based position in order to detect possible drift errors in the load sensor (34), and/or
- to monitor whether the diagnosis marker (52) can be detected at the diagnosis marker position and to assume the fault state when the diagnosis marker (52) cannot be detected at the diagnosis marker position.

5. Electrical drive system (10) according to claim 4, **characterized in that**
- the electronic control apparatus (50) is configured to actuate the motor (20) in such a way that the load device (30) cyclically crosses the diagnosis marker (52).

6. Electrical drive system (10) according to claim 4 or 5, **characterized in that**
- the diagnosis marker (52) is arranged at a point along the path at which a maximum movement speed of the load device (30) is permissible.

7. Electrical drive system (10) according to any of the preceding claims, **characterized in that**
- the motor (20) is an electric motor.

8. Electrical drive system (10) according to any of the preceding claims, **characterized in that**
- the load device (30) is a rotor of a high bay arrangement, a rotary table and/or a conveyor belt (38).

9. Electrical drive system (10) according to any of the preceding claims, **characterized in that**
- the electronic control apparatus (50) is designed to be operated in systems of functional safety.

## Revendications

1. Système d'entraînement électrique (10) comprenant :
- un moteur (20) muni d'un arbre moteur (22),
- un organe de charge (30) qui est mobile le long d'un chemin,
- une unité d'accouplement (40) qui est conçue pour convertir un mouvement de rotation de l'arbre moteur (22) en un mouvement de l'organe de charge (30) le long du chemin, l'unité d'accouplement (40) étant susceptible de glisser,
- un codeur de moteur (24) destiné à déterminer une position angulaire de l'arbre moteur (22),
- un codeur de charge (34) destiné à déterminer une position, basée sur un codeur de charge, de l'organe de charge (30), et
- un dispositif de commande électronique (50),
- qui est relié au codeur de moteur (24) et au codeur de charge (34),
- qui est conçu pour calculer une position, basée sur le codeur de moteur, de l'organe de charge (30) sur la base d'un changement de position angulaire en rotation de l'arbre moteur (22), lequel changement est déterminé par le codeur de moteur (24),
- et qui est conçu pour calculer un glissement (60) sur la base d'une différence entre la position basée sur le codeur de moteur et la position basée sur le codeur de charge après chaque changement de la position angulaire en rotation de l'arbre moteur (22) d'une valeur de référence,
**caractérisé en ce que**
le dispositif de commande électronique (50) est en outre conçu pour
régler la position basée sur le codeur de moteur à la position basée sur le capteur de charge si le glissement (60) est inférieur à une valeur de seuil de glissement ;
prendre un état défectueux si le glissement (60) est supérieur à la valeur de seuil de glissement ;
et calculer, sur la base du glissement (60), un degré d'usure associé à l'unité d'accouplement (40).

2. Système d'entraînement électrique (10) selon la revendication 1, **caractérisé en ce que**
- la valeur de référence correspond à un tour complet de l'arbre moteur (22).

3. Système d'entraînement électrique (10) selon l'une des revendications précédentes, **caractérisé en ce que**
- la position basée sur le codeur de moteur est calculée à l'aide d'un modèle de l'unité d'accouplement (40) .

4. Système d'entraînement électrique (10) selon l'une des revendications précédentes, **caractérisé en ce que**
- au moins un repère de diagnostic (52) est disposé à une position de repère de diagnostic le long du chemin, le dispositif de commande électronique (50) étant conçu pour
- déceler un dépassement du repère de diagnostic (52) par l'organe de charge (30) et comparer, en cas de dépassement du repère de diagnostic (52), la position du repère de diagnostic à la position basée sur le capteur de charge afin de détecter d'éventuelles erreurs de dérive du capteur de charge (34) et/ou
- surveiller si le repère de diagnostic (52) peut être détecté à la position de repère de diagnostic et prendre l'état d'erreur si le repère de diagnostic (52) ne peut pas être détecté à la position de repère de diagnostic.

5. Système d'entraînement électrique (10) selon la revendication 4, **caractérisé en ce que**
- le dispositif de commande électronique (50) est conçu pour commander le moteur (20) de telle sorte que l'organe de charge (30) dépasse le repère de diagnostic (52) de manière cyclique.

6. Système d'entraînement électrique (10) selon la revendication 4 ou 5, **caractérisé en ce que** le repère de diagnostic (52) est disposé en un point du chemin où une vitesse de déplacement maximale de l'organe de charge (30) est admissible.

7. Système d'entraînement électrique (10) selon l'une des revendications précédentes, **caractérisé en ce que**
- le moteur (20) est un moteur électrique.

8. Système d'entraînement électrique (10) selon l'une des revendications précédentes, **caractérisé en ce que**
- l'organe de charge (30) est un rotor d'un ensemble de rayonnages à grande hauteur, un plateau tournant et/ou une bande transporteuse (38).

9. Système d'entraînement électrique (10) selon l'une des revendications précédentes, **caractérisé en ce que**
- le dispositif de commande électronique (50) est conçu pour être utilisé dans des systèmes de sécurité fonctionnelle.
